# EUROPEAN PATENT APPLICATION

(11) **EP 3 459 658 A1**
(43) Date of publication of application: **27.03.2019**
(21) Application number: 17889523.1
(22) Date of filing: 29.12.2017
(51) Int. Cl.: B22F 9/00, B22F 9/02, B22F 9/06, B22F 9/08

(54) **ATOMIZATION DEVICE AND METHOD FOR PREPARING METAL ALLOY POWDER**

(30) Priority: 04.08.2017 CN 201710660519
(71) Applicant: Miasolé Equipment Integration (Fujian) Co., Ltd., 362000 Quanzhou Fujian (CN)
(72) Inventor: ZENG, Yulin, Quanzhou Fujian 362005 (CN); WAN, Jie, Quanzhou Fujian 362005 (CN); WU, Fuzhong, Quanzhou Fujian 362005 (CN); HUANG, Xinan, Quanzhou Fujian 362005 (CN); XU, Xiaohua, Quanzhou Fujian 362005 (CN); CAI, Ailing, Quanzhou Fujian 362005 (CN)
(74) Representative: Cabinet Beau de Loménie
(86) International application number: PCT/CN2017/120070
(87) International publication number: WO 2019/024419

(57) **Abstract**

The present disclosure discloses an atomization device for preparing metal alloy powder, including a main body provided with an atomization chamber. The atomization chamber includes: an inlet that is configured to introduce metal alloy liquid; a high-pressure inert gas pipeline system that is configured to provide a high-pressure inert gas as an atomizing medium and power for the metal alloy liquid introduced into an atomization zone of the atomization chamber, to atomize the metal alloy liquid; and an oxygen-containing gas pipeline system that is configured to transfer oxygen-containing gas to the atomization zone, to passivate a surface of the metal alloy powder obtained after atomization. The present disclosure further discloses a method for preparing the metal alloy powder.

## Description

### TECHNICAL FIELD

The present disclosure relates to but not limit to an atomization device, and more particularly to an atomization device for preparing a metal alloy powder.

### BACKGROUND

At present, alloy powders used in a field of preparing solar energy are prepared mainly by a gas atomization powder-preparing device. The gas atomization powder-preparing device is used for preparing various metal powders. Respective metal components in the alloy powder applied in the field of a solar energy have very different melting points, for example, in a copper indium gallium alloy, the indium has a melting point of 156.6°C, the gallium has a melting point of 29.8°C, and the copper has a melting point of 1083.4°C. There are indium-based alloy phases and copper-gallium intermetallic compounds largely in an alloy phase of the copper indium gallium, but since the melting point of the indium-based alloy is relatively lower and the solid-liquid coexistence temperature range of the copper indium gallium alloy is relatively larger (the solid-liquid coexistence temperature has a range of 250∼600°C), which results in that the alloy powders manufactured by the gas atomization powder-preparing device present a serious aggregation and sticking phenomenon. A large number of small satellites attached to particle surfaces of the alloy powders, which not only makes the alloy powder yield too low, but also leads to poor fluidity of the alloy powders, so as to affect continuous use of the alloy powders, for example, a powder-transferring system is usually blocked as transferring the alloy powders, and uneven powder-transferring occurs, when target materials are sprayed, and performance of products produced finally can be affected.

### SUMMARY

Hereinafter, subject matter as described in the present disclosure will be illustrated but not intended to limit the protection scope of the claims.

The present disclosure provides an atomization device for preparing metal alloy powder. The atomization device can passivate the surface of the powder in the process of preparing the powder without introducing other metal impurities into copper indium gallium metal alloy powder, so as to control satellite ball sphericity of the metal alloy powder, number of satellite ball powder and the sticking phenomenon among the powders, and finally improve mobility of the meal alloy powder.

The present disclosure provides an atomization device for preparing metal alloy powder, comprising a main body provided with an atomization chamber, the atomization chamber including:
an inlet that is configured to introduce metal alloy liquid;
a high-pressure inert gas pipeline system that is configured to provide a high-pressure inert gas as an atomizing medium and power for the metal alloy liquid introduced into an atomization zone of the atomization chamber, to atomize the metal alloy liquid; and
an oxygen-containing gas pipeline system that is configured to transfer oxygen-containing gas to the atomization zone, to passivate a surface of the metal alloy powder obtained after atomization.

Optionally, the oxygen-containing gas pipeline system includes an oxygen-containing gas pipeline and a gas intake device in a fluid communication with the oxygen-containing gas pipeline, and the oxygen-containing gas pipeline transfers the oxygen-containing gas to the atomization zone by the gas intake device.

Optionally, a buffer disk is disposed between the oxygen-containing gas pipeline and the gas intake device, a buffer cavity is disposed in the buffer disk, and the oxygen-containing gas pipeline is in fluid communication with the gas intake device through the buffer cavity.

Optionally, the oxygen-containing gas pipeline is a low-pressure oxygen-containing gas pipeline, and a pressure in the low-pressure oxygen-containing gas pipeline is not less than 0.2 MPa.

Optionally, the pressure in the low pressure oxygen-containing gas pipeline is in a range of 0.2MPa to 0.9MPa.

Optionally, the gas intake device includes a plurality of metal pipes, and the metal pipes are vertically fixed on the upper portion of the atomization chamber, and are evenly spaced in a circumferential direction of the atomization chamber.

Optionally, the gas intake device includes a connecting pipe in fluid communication with the oxygen-containing gas pipeline and a ring-shaped pipe in fluid communication with the connecting pipe, and gas spraying holes are provided on the ring-shaped pipe and evenly spaced in a circumferential direction of the ring-shaped pipe.

Optionally, the high-pressure inert gas pipeline system includes a high-pressure inert gas pipeline and a gas nozzle, and the gas nozzle is in fluid communication with the high-pressure inert gas pipeline and is configured to spray high-pressure inert gas toward an inlet.

Optionally, a spray disk is disposed between the high-pressure inert gas pipeline and the gas nozzle; a cavity in fluid communication with the gas nozzle is disposed in the spray disk; and the gas nozzles are evenly spaced in a circumferential direction of the spray disk, optionally the gas nozzles are ring-shaped slits.

Optionally, the inlet passes through the middle of the spray disk, and a gas nozzle on the spray disk is disposed toward the inlet direction.

Optionally, the oxygen-containing gas pipeline system and the high-pressure inert gas pipeline system are provided with a gas flow control device and a pressure regulating device, respectively.

Optionally, a powder collection tank is detachably connected to the bottom portion of the atomization chamber.

Optionally, the atomization chamber is provided with a gas outlet; the gas outlet is in fluid communication with an exhaust gas treatment device; and the exhaust gas treatment device includes a cyclone separator and a powder filter device that are connected in sequence.

Optionally, the main body further includes a vacuum melting chamber which is provided with a melting device and a heating device, the heating device is configured to heat the melting device, and the melting device has a liquid outlet which is in fluid communication with the inlet of the atomization chamber via a flow guide pipe.

Optionally, a heating and insulating sleeve is provided at a periphery of the flow guide pipe.

The present disclosure further provides an atomization device for preparing metal alloy powder, including a main body, in which a vacuum melting chamber and an automation chamber are arranged from up to down, the vacuum melting chamber is provided with a melting device and a heating device. The heating device heats the melting device. The melting device has a liquid outlet that is communicated with the top portion of the atomization chamber via the flow guide pipe. The liquid outlet before the atomization is in a closed sealing state, the liquid outlet is opened before the atomization such that the melt metal liquid is transferred to the atomization point of the atomization chamber. Gas nozzles are provided in the atomization chamber, connected with the high-pressure insert gas pipeline, and spay the high-pressure insert gas toward the outlet of the flow guide pipe. An oxygen-containing pipeline and a gas intake device connected to the oxygen-containing pipeline are provided in the atomization chamber. The oxygen-containing pipeline transfers an oxygen-containing gas into the atomization chamber via the gas intake device.

Optionally, a buffer disk is disposed between the oxygen-containing gas pipeline and the gas intake device, a buffer cavity is disposed in the buffer disk, and the oxygen-containing gas pipeline is in fluid communication with the gas intake device through the buffer cavity.

Optionally, the oxygen-containing gas pipeline is a low-pressure oxygen-containing gas pipeline, and a pressure in the low-pressure oxygen-containing gas pipeline is not less than 0.2MPa.

Optionally, the pressure in the low pressure oxygen-containing gas pipeline is in a range of 0.2MPa to 0.9MPa.

Optionally, the gas intake device includes a plurality of metal pipes, and the metal pipes are vertically fixed on the upper portion of the atomization chamber, and are evenly spaced in a circumferential direction of the atomization chamber.

Optionally, the gas intake device includes a connecting pipe in fluid communication with the oxygen-containing gas pipeline and a ring-shaped pipe in fluid communication with the connecting pipe, and gas spraying holes are provided on the ring-shaped pipe and evenly spaced in a circumferential direction of the metal pipe.

Optionally, the ring-shaped pipe is a ring-shaped metal pipe.

Optionally, the oxygen-containing gas pipeline and the high-pressure inert gas pipeline are provided with a gas flow control device and a pressure regulating device, respectively.

Optionally, a spray disk is disposed between the high-pressure inert gas pipeline and the gas nozzle; a cavity in fluid communication with the gas nozzle is disposed in the spray disk; and the gas nozzles are evenly spaced in a circumferential direction of the spray disk.

Optionally, the gas nozzles are ring-shaped slits.

Optionally, an outlet of the flow guide pipe passes through the middle of the spray disk, and a gas nozzle on the spray disk is disposed toward the outlet of the flow guide pipe.

Optionally, a powder collection tank is detachably connected to the bottom portion of the atomization chamber.

Optionally, the atomization chamber is provided with a gas outlet; the gas outlet is in fluid communication with an exhaust gas treatment device; and the exhaust gas treatment device includes a cyclone separator and a powder filter device that are connected in sequence.

Optionally, a heating and insulating sleeve is provided at a periphery of the flow guide pipe.

The present disclosure further provides a method for preparing metal alloy powder, including:
introducing the metal alloy powder into an atomization chamber;
spraying a high-pressure insert gas to the metal alloy liquid, to atomize the metal alloy liquid; and
introducing the oxygen-containing gas into an atomization zone of the atomization chamber, such that the atomization zone become an oxidizing atmosphere, so as to passivate a surface of the metal alloy powder obtained after atomization.

In the present disclosure, an ordinary skilled in the art should understand:
A "high-pressure inert gas" refers to an inert gas (e.g. nitrogen or argon) having a pressure capable of effecting atomization of metal alloy liquid when being sprayed to the metal alloy liquid, as provided by a high-pressure inert gas pipeline system;
The "surface passivation of alloy metal powder" refers to that minor oxidation of the surface of the metal alloy powder can effectively inhibit the metal alloy powder from sticking to each other, to reduce formation of satellite balls.

The "micro-oxidation of the surface of metal alloy powder" refers to achieving an object that the surface of the metal alloy powder is passivated, and also spherical shape of the metal alloy powder cannot be changed due to non-oxidation degree of the metal alloy powder, and the overall oxygen content of the metal alloy powder is oxidized on the surface of the metal alloy powder at a lower level as possible, so that a copper indium gallium powder target is made of the copper indium gallium powder, which fully meets the needs for use unit of the sputtering target.

The "low-pressure oxygen-containing gas" refers to a pressure in the oxygen-containing gas pipeline, which can achieve the "micro-oxidation of the surface of the metal alloy powder".

The "ring-shaped pipe" is not limited to a pipeline in a shape of a ring, and also includes the pipelines in other shapes which form a closed loop, in fluid communication with the connecting pipe, to release oxygen-containing gas.

Advantageous effects of the present disclosure are presented as follows:
1. The oxygen-containing gas pipeline and the gas intake device are provided in the atomization chamber of the present disclosure. The oxygen-containing gas pipeline transfers the oxygen-containing gas into the atomization chamber via the gas intake device. The oxygen-containing gas can passivate the surface of the metal alloy powder during the metal alloy solution is atomized. Since droplets formed by atomization of the metal alloy solution in the process of the atomization are different in size. The droplets or particles with different sizes have different velocities in a stable atomization airflow, that is, the smaller the particle, the faster the velocity, so that the smaller particles always intend to collide with the larger particles with slower velocity. Significantly, the metal alloy powder which surface has been passivated can rarely be attached by the smaller particles, to inhibit formation of the satellite balls and reduce sticking phenomenon of the powders, especially have a significant effect on the indium alloy such as copper indium gallium, which has a large range of solid-liquid coexistence zone.
2. In the present disclosure, the gas flow control device and the pressure regulating device are provided on the oxygen-containing gas pipeline, such that the oxygen-containing gas sprayed by the gas intake device to form an oxidizing atmosphere with a controllable oxygen concentration in the atomization chamber. The oxidizing property in the atomization chamber 3 is determined by oxygen concentration and flow rate of the oxygen-containing gas, so that flow rate of the oxygen-containing gas into the atomization zone in the atomization chamber 3, so as to control oxidation degree of the small droplets and small particles during the metal alloy solution is being atomized. Therefore, this controllable oxidation process may be used to achieve modification and passivation of the surface of the metal alloy powder, and the oxygen content of the powder cannot affect the using performance of the final products.
3. In the present disclosure, the gat outlet of the atomization chamber is communicated with the exhaust gas treatment device to allow the atomized gas to flow out of the atomization chamber through the gas outlet, separate fine powder by the cyclone separator, and then filtered by a powder filter device to be discharged into the atmosphere.
4. In the present disclosure, a powder collection tank is detachably connected to the bottom portion of the atomization chamber, such that the metal alloy powder formed by atomization in the atomization chamber fall into the powder collection tank, and the alloy powder obtained by the atomization can be obtained by disassembling the powder collection tank.
5. In the present disclosure, the oxygen-containing gas pipeline is the low-pressure oxygen-containing gas pipeline, which can introduce a low-pressure oxygen-containing gas into the atomization chamber, such that an accurate flow control of the oxygen-containing gas at a low flow rate can be achieved.
6. In the present disclosure, the oxygen-containing gas pipeline is communicated with the gas intake device through the buffer cavity. The buffer cavity enables the gas intake device to spray oxygen-containing gas under a stable pressure environment, in this way, precise flow control of the oxygen-containing gas can be easily realized.
7. In the present disclosure, the gas intake device is a plurality of metal pipes that are evenly spaced in a horizontal direction, such that the oxygen-containing gas transferred into the atomization chamber by the metal pipes can be evenly distributed.
8. In the present disclosure, the gas intake device includes the ring-shaped metal pipe and gas spraying holes arranged on the ring-shaped metal pipe, such that the oxygen-containing gas transferred into the atomization chamber through the gas spraying holes are evenly distributed.
9. In the present disclosure, the high-pressure inert gas pipeline is communicated with the gas nozzle through the ring-shaped spray disk, and the ring-shaped spray disk enables the gas nozzle to spray the high-pressure inert gas under a stable pressure environment, which can effectively realize the precise flow control of the high-pressure inert gas.
10. In the present disclosure, a heating and insulating sleeve is provided at the outer periphery of the flow guide pipe, and can heat the flow guide pipe to a predetermined temperature before starting the atomization operation, so as to prevent metal alloy solution from being solidified in the flow guide pipe to block the flow guide pipe at a phase of starting the atomization.

Other features and advantages of the disclosure will be set forth partially in the description which follows and in part will become apparent to those having ordinary skill in the art or may be learned from practice of the present disclosure. The objectives and other advantages of the present disclosure may be realized and attained by the structure particularly pointed out in the written description and claims hereof as well as the appended drawings.

### BRIEF DESCRIPTION OF THE DRAWINGS

The accompanying drawings, which are included to provide a further understanding of the technical solution of the present disclosure and constitute a part of the present disclosure, illustrate embodiment(s) of the present disclosure and together with the description serve to explain the technical solution of the present disclosure, and are not provided to limit the technical solution of the present disclosure.
Fig. 1 is a cross-sectional view of an embodiment of the atomization device according to the present disclosure;
Fig. 2 is a flowchart of a method for preparing metal alloy powders according to the present disclosure;
Fig. 3 is a cross-sectional view of another embodiment of the atomization device according to the present disclosure;
Fig. 4 is a schematic structural view of a gas intake device in the atomization device according to the present disclosure; and
Fig. 5 is a schematic structural view of the bottom portion of a ring-shaped metal pipe in the gas intake device according to the present disclosure.

### DETAILED DESCRIPTION

The foregoing features, aspects and advantages of the present disclosure will become more apparent from the following detailed description of this disclosure when taken in conjunction with the accompanying drawings. It should be noted that, embodiments in the present disclosure and features in the embodiments may be combined with each other arbitrarily without any conflict.

An embodiment of the present disclosure provides an atomization device for preparing metal alloy powder includes a main body provided with an atomization chamber. The atomization chamber includes:
an inlet that is configured to introduce metal alloy liquid;
a high-pressure inert gas pipeline system that is configured to provide a high-pressure inert gas as an atomizing medium and power for the metal alloy liquid introduced into an atomization zone of the atomization chamber, to atomize the metal alloy liquid; and
an oxygen-containing gas pipeline system that is configured to transfer oxygen-containing gas to the atomization zone, to passivate a surface of the metal alloy powder obtained after atomization.

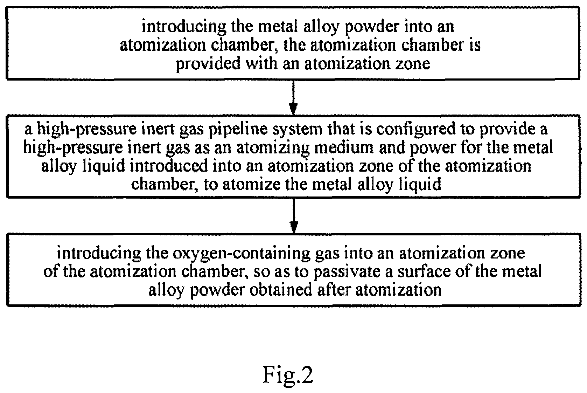

The embodiment of the present disclosure also provides a method for preparing metal alloy powder. A flow chart of the method is shown in Fig. 2. The method includes:
introducing metal alloy liquid into an atomization chamber;
spraying a high-pressure inert gas to the metal alloy liquid to atomize the metal alloy liquid; and
introducing an oxygen-containing gas into an atomization zone of the atomization chamber, such that the atomization zone becomes an oxidizing atmosphere, so as to passivate a surface of the metal alloy powder obtained after atomization.

Specifically, description will be made in detail with reference to a first embodiment and a second embodiment below.

### The First Embodiment

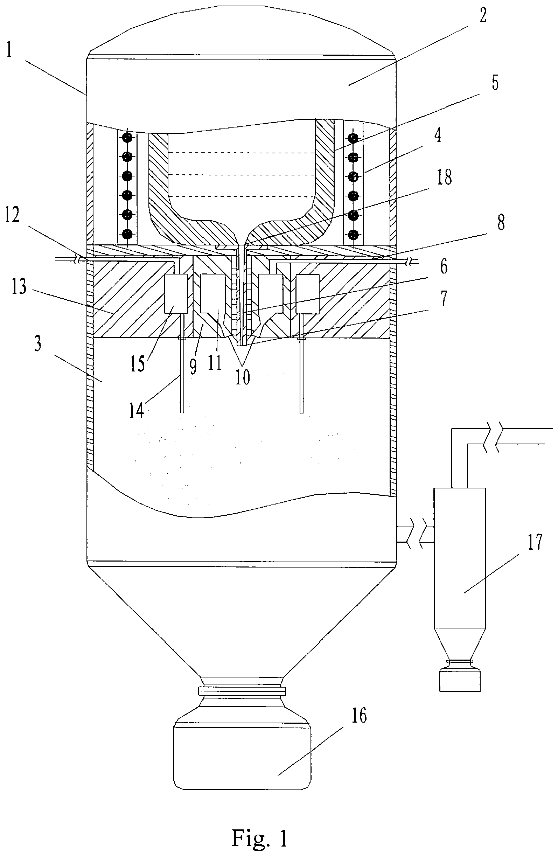

As shown in Fig. 1, an atomization device for preparing metal alloy powder includes a main body 1. The main body 1 has a cylindrical tower body and a conical bottom portion. A vacuum melting chamber 2 and an automation chamber 3 are arranged in the main body 1 from up to down. The vacuum melting chamber 2 is disposed directly above the atomization chamber 3, and is separated from the atomization chamber 3 by a plate. A melting device 5 and a heating device 4 are provided in the vacuum melting chamber 2. In this embodiment, the melting device 5 is a crucible. The heating device 4 is disposed around a periphery of the melting device 5. The heating device 4 can heat the melting device 5 until all the alloy metals in the melting device 5 are melted into metal alloy liquid. A liquid outlet 18 is provided on the bottom portion of the melting device 5. The melting device 5 is communicated with one end of a flow guide pipe 6 through the liquid outlet 18. The liquid outlet 18 can guide the metal alloy liquid in the melting device 5 into the flow guide pipe 6. Before atomization, the liquid outlet 18 is blocked by a mechanical sealing device (not shown). When atomization, the mechanical sealing device controls closing of the fluid outlet 18 as required, and thereby controlling the metal alloy liquid to flow through the flow guide pipe 6 to an atomization point.

The flow guide pipe 6 passes through the plate for separating the vacuum melting chamber 2 from the atomization chamber 3, and has an outlet 7 at the other end to communicate with a top portion of the atomization chamber 3, so that the metal alloy liquid may be transferred to the top portion of the automation chamber 3 to be atomized. A heating and insulating sleeve is provided at the outer periphery of the flow guide pipe 6, and can heat the flow guide pipe 6 to a predetermined temperature before starting the atomization operation, so as to prevent metal alloy solution from being solidified in the flow guide pipe 6 to block the flow guide pipe at a phase of starting the atomization.

A high-pressure inert gas pipeline 8, a ring-shaped spray disk 9, and a gas nozzle 10 are sequentially connected to one another on the top portion of the atomization chamber 3. The high-pressure inert gas pipeline 8 is used to transfer high-pressure inert gas to the atomization chamber 3. The ring-shaped spray disk 9 is horizontally fixed on the top portion of the atomization chamber 3, and is provided with a ring-shaped cavity 11 therein. A plurality of gas nozzles 10 are communicated on the bottom portion of the ring-shaped spray disk 9, and the gas nozzles 10 are distributed on the ring-shaped spray disk 9 in a circumferential direction, or configured as ring-shaped slits. When atomization is started, the high-pressure inert gas pipeline 8 transfers the high-pressure inert gas to the ring-shaped cavity 11 in the ring-shaped spray disk 9 for buffering, and then the high-pressure inert gas in the ring-shaped cavity 11 is transferred into the gas nozzle 10, such that the gas nozzle 10 continuously and stably sprays the high-pressure inert gas. The central portion of the ring-shaped spray disk 9 is a hollow structure, that is a ring-shaped cavity 11. The flow guide pipe 6 passes through the ring-shaped spray disk 9, so that the gas nozzles 10 on the bottom portion of the ring-shaped spray disk 9 are distributed around the outlet 7 of the flow guide pipe 6. The gas nozzles 10 are disposed toward the outlet 7 of the flow guide pipe 6, such that the high-pressure inert gas sprayed from the gas nozzles 10 is sprayed to the outlet 7 of the guide tube 6. When atomization is started, the metal alloy solution in the flow guide pipe 6 flows out of the outlet 7, and the gas nozzles 10 spray the high-pressure inert gas to the metal alloy solution that flows out of the outlet 7, so as to atomize the metal alloy solution.

An oxygen-containing gas pipeline 12, a buffer disk 13, and gas intake device 14 are further sequentially communicated on the top portion of the atomization chamber 3 in this embodiment. The oxygen-containing gas pipeline 12 is used to transfer the oxygen-containing gas into the atomization chamber 3. The buffer disk 13 is presented in a ring shape, and is provided with a ring-shaped buffer cavity 15 therein. The oxygen-containing gas pipeline 12 is communicated with the buffer cavity 15. A gas intake device 14 is disposed on the bottom portion of the buffer disk 13, and has a plurality of vertically disposed metal pipes, such as stainless steel pipes. The gas intake devices 14 are evenly distributed on the bottom portion of the buffer disk 13 in a circumferential direction. The gas intake device 14 has one end in communication with the buffer cavity 15, and the other end fixed vertically on the upper portion of the atomization chamber 3. When the atomization is started, the oxygen-containing gas pipeline 12 firstly transfers the oxygen-containing gas to the buffer cavity 15 in the buffer disk 13 for buffering, and the oxygen-containing gas in the buffer cavity 15 is further transferred into the gas intake device 14, such that the intake device 14 transfers the oxygen-containing gas into the atomization chamber 3.

The oxygen-containing gas can passivate the surface of the metal alloy powder during the metal alloy solution is atomized. Since droplets formed by atomization of the metal alloy solution in the process of the atomization are different in size. The droplets or particles with different sizes have different velocities in a stable atomization airflow, that is, the smaller the particle, the faster the velocity, so that the smaller particles always intend to collide with the larger particles with slower velocity. Significantly, the metal alloy powder which surface has been passivated can rarely be attached by the smaller particles, to inhibit formation of the satellite balls, especially have a significant effect on the indium alloy such as copper indium gallium, which has a large range of solid-liquid coexistence zone.

In this embodiment, the oxygen-containing gas pipeline 12 is communicated with the gas intake device 14 through the buffer cavity 15. The buffer cavity 15 enables the gas intake device 14 to spray oxygen-containing gas under a stable pressure environment, in this way, precise flow control of the oxygen-containing gas can be easily realized. The gas intake devices 14 according to the present disclosure are evenly spaced in the circumferential direction of the atomization chamber 3, so that the oxygen-containing gas transferred into the atomization chamber 3 by the gas intake device 14 can be evenly distributed.

In this embodiment, the oxygen-containing gas pipeline 12 is a low-pressure oxygen-containing gas pipeline, wherein the low-pressure oxygen-containing gas pipeline refers to a pipe in which the gas pressure is 0.2MPa to 0.9MPa. The low-pressure oxygen-containing gas pipeline can introduce a low-pressure oxygen-containing gas into the atomization chamber 3, such that an accurate flow control of the oxygen-containing gas at a low flow rate can be achieved.

In this embodiment, the oxygen-containing gas pipeline 12 and the high-pressure inert gas pipeline 8 are respectively provided with a gas flow control device and a pressure regulating device. The gas flow control device and the pressure regulating device are respectively used for controlling flow rate and pressure of the gas in the oxygen-containing gas pipeline 12 and the high-pressure inert gas pipeline 8. The gas flow control device and the pressure regulating device in the oxygen-containing gas pipeline 12 enable the oxygen-containing gas sprayed by the gas intake device 14 to form a controllable oxidizing atmosphere in the atomization chamber 3. The oxidizing property in the atomization chamber 3 is determined by oxygen concentration and flow rate of the oxygen-containing gas, so that flow rate of the oxygen-containing gas into the atomization zone in the atomization chamber 3, so as to control oxidation degree of the small droplets and small particles during the metal alloy solution is being atomized. Therefore, this controllable oxidation process may be used to achieve modification and passivation of the surface of the metal alloy powder.

In this embodiment, a powder collection tank 16 is detachably connected to the bottom portion of the atomization chamber 3, where the powder collection tank 16 is connected to the bottom portion of the atomization chamber 3 via a flange. The powder collection tank 16 is used for collecting the alloy powder formed by atomization in the atomization chamber 3, that is, the alloy powder obtained by the atomization can be obtained by disassembling the powder collection tank 16.

In this embodiment, the atomization chamber 3 is provided with a gas outlet that is in communication with an exhaust gas treatment device. The exhaust gas treatment device includes a cyclone separator 17 and a dust filtration device that are connected in sequence. The exhaust gas treatment device allows the atomized gas to flow out of the atomization chamber 3 through the gas outlet, separates fine powder by the cyclone separator 17, and then filtered by a powder filter device to be discharged into the atmosphere.

In an atomization preparation process of the present disclosure, respective metal raw materials are completely melted in the melting device 5. Before atomization, the liquid outlet 18 on the bottom portion of the melting device 5 is blocked by a mechanical sealing device (for example, a plunger device), and no metal alloy liquid is dripped into the atomization chamber 3 through the flow guide pipe 6. When the atomization is started, the mechanical sealing device of the liquid outlet 18 on the bottom portion of the melting device 5 is lifted up by a mechanism connected to the outside, and the metal alloy liquid flows to the top portion of the atomization chamber 3 (i.e., a central position of the hollow structure in the middle of the ring-shaped spray disk 9) through the flow guide pipe 6. At the same time, switches of the high-pressure inert gas pipeline 8 and the oxygen-containing gas pipeline 12 are opened, and the flow rate and pressure of the high-pressure inert gas are adjusted to a specified value, so that a high-speed air flow will be generated, and even exceed a speed of sound when the high-pressure inert gas passes through the gas nozzle 10 on the bottom portion of the ring-shaped spray disk 9, so as to violently interact with the metal alloy liquid that flows out of the flow guide pipe 6, and thereby the high-pressure inserted gas is atomized into fine droplets, and the fine droplets are then be forced rapidly cooled during the air flow pushes, so that the metal alloy powder can be obtained. At the same time, the oxygen-containing gas guided through the buffer disk 13 and the gas intake device 14 is introduced into the atomization zone in the atomization chamber. The oxygen contained in the oxygen-containing gas changes the atomization zone into a controllable oxidizing atmosphere, so that the small droplets during flying and cooling form surface micro-oxidation, to passivate the surface of the obtained metal alloy powder, so as to inhibit mutual adhesion of metal alloy powders and reduce the formation of satellite balls, especially take a prominent effect on the indium alloys such as copper indium gallium, which have a large range of solid-liquid coexistence zone.

The present disclosure may efficiently adjust the oxygen concentration in the atomization chamber 3 by adjusting the pressure and the flow rate of the oxygen-containing gas, to control the oxidation degree of the surface of the metal alloy powder, so as to achieve an object that the surface of the metal alloy powder is passivated, and also spherical shape of the metal alloy powder cannot be changed due to non-oxidation degree of the metal alloy powder, and the overall oxygen content of the metal alloy powder is as low as possible, for example, the oxygen content of the copper indium gallium powder prepared by the device and method is less than 5000 ppm, preferably 100 to 1500 ppm. After trial test, a copper indium gallium powder target is made of the copper indium gallium powder, which fully meets the needs for use unit of the sputtering target.

### The Second Embodiment

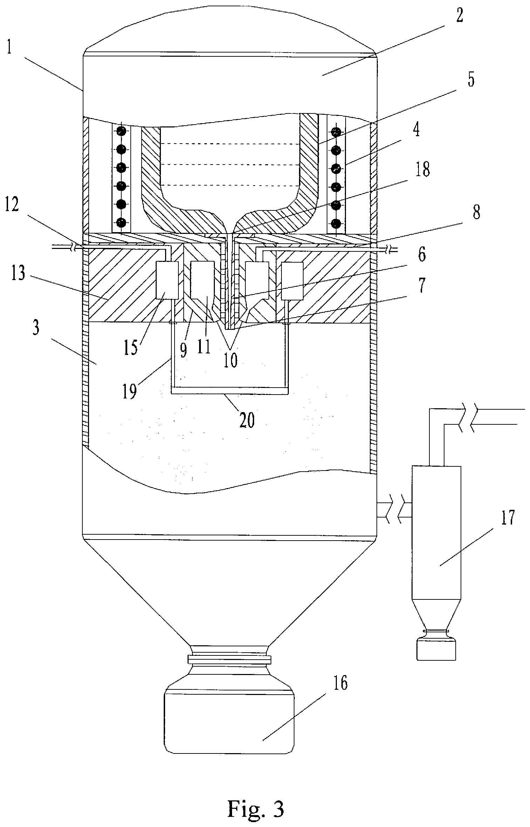

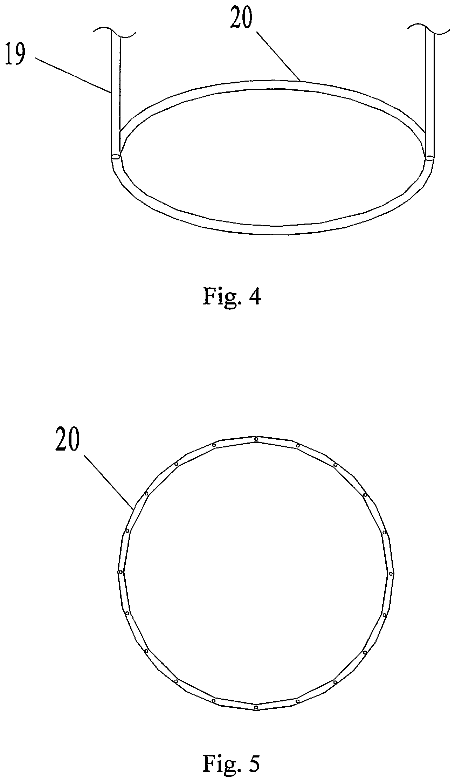

Differences between the second embodiment and the first embodiment lie in that as shown in Fig. 3, Fig. 4 and Fig. 5, the gas intake device 14 in Fig. 1 is substituted for a gas intake device including a connecting pipe 19 and a ring-shaped metal pipe 20, wherein the connecting pipe 19 is vertically fixed on the top portion of the atomization chamber 3, and the connecting pipe 19 has one end in communication with the buffer cavity 15 in the buffer disk 13, and the other end in communication with the ring-shaped metal pipe 20; and gas spraying holes are provided on the bottom portion of the ring-shaped metal pipe 20, and are evenly spaced in the circumferential direction of the ring-shaped metal pipe 20. The oxygen-containing gas passes through the oxygen-containing gas pipeline 12, the buffer chamber 15, and the connecting pipe 19, and finally to the ring-shaped metal pipe 20, and is sprayed from the gas spraying holes of the ring-shaped metal pipe 20. Therefore, in this embodiment, the gas spraying holes on the ring-shaped metal pipe 20 can more preferable for uniform transfer and distribution of the oxygen-containing gas in the atomization zone.

The present disclosure is an example in a principle of the embodiments of the present application, and does not define the present disclosure in any form or substantially or limit the present disclosure to a specific embodiment. For those skilled in the art, it would be obvious that elements, methods and systems of the technical solutions in the embodiments of the present disclosure may be varied, changed, modified, and evolved without departing from the embodiments and technical solutions of the present disclosure as above described, for example, principle, concept and scope as defined in the claims. The technical solutions involving the aforesaid varies, changes, alterations, and evolutions are all included in the equivalent embodiments of the present disclosure, which are included within the scope of the claims. Although embodiments of the present disclosure can be embodied in many different forms, some embodiments of the present disclosure are described in detail herein. Furthermore, the embodiments of the present disclosure include any possible combination of some or all of the various embodiments described herein, also within the scope as defined by the claims of the present disclosure. All patents, patent applications, and other cited documents as mentioned anywhere in the present disclosure or in any cited patent, cited patent application, or other cited documents are hereby incorporated by reference into the present disclosure as a whole.

The above disclosure is intended to be illustrative and not exhaustive. For those skilled in the art, this specification proposes many changes and alternatives. All these alternatives and variations are intended to be included within the scope of the claims, wherein the term "comprise" means "include, but not limited thereto". The preferable embodiments of the present disclosure are described herein, and it would be recognized for those skilled in the art that other equivalent variations of the embodiments described herein are also included in the appended claims.

### Industrial Applicability

The present disclosure provides an atomization device for preparing metal alloy powder and its method. With such device and method, adhesion of the small metal alloy powder particles in the process of the atomization can be effectively reduced, so as to control satellite ball sphericity of the metal alloy powder, number of satellite ball powder and the sticking phenomenon of the powders, and finally improve mobility of the meal alloy powder, such that the metal alloy powder with better mobility can be more efficiently and effectively.

## Claims

1. An atomization device for preparing metal alloy powder, comprising a main body provided with an atomization chamber, the atomization chamber comprising: the inlet that is configured to introduce a metal alloy liquid;
a high-pressure inert gas pipeline system that is configured to provide a high-pressure inert gas as an atomizing medium and power for the metal alloy liquid introduced into an atomization zone of the atomization chamber, to atomize the metal alloy liquid; and
an oxygen-containing gas pipeline system that is configured to transfer oxygen-containing gas to the atomization zone, to passivate a surface of the metal alloy powder obtained after atomization.

2. The atomization device for preparing the metal alloy powder according to claim 1, wherein oxygen-containing gas pipeline system comprise an oxygen-containing gas pipeline and a gas intake device in a fluid communication with the oxygen-containing gas pipeline, and the oxygen-containing gas pipeline transfers the oxygen-containing gas to the atomization zone by the gas intake device.

3. The atomization device for preparing the metal alloy powder according to claim 2, wherein a buffer disk is disposed between the oxygen-containing gas pipeline and the gas intake device, a buffer cavity is disposed in the buffer disk, and the oxygen-containing gas pipeline is in fluid communication with the gas intake device through the buffer cavity.

4. The atomization device for preparing the metal alloy powder according to claim 2 or 3, wherein the oxygen-containing gas pipeline is a low-pressure oxygen-containing gas pipeline, and a pressure in the low-pressure oxygen-containing gas pipeline is not less than 0.2 MPa, optionally, the pressure in the low pressure oxygen-containing gas pipeline is in a range of 0.2MPa to 0.9MPa.

5. The atomization device for preparing the metal alloy powder according to any one of claims 2 to 4, wherein the gas intake device comprises a plurality of metal pipes, and the metal pipes are vertically fixed on the upper portion of the atomization chamber, and are evenly spaced in a circumferential direction of the atomization chamber.

6. The atomization device for preparing the metal alloy powder according to any one of claims 2 to 5, wherein the gas intake device comprises a connecting pipe in fluid communication with the oxygen-containing gas pipeline and a ring-shaped pipe in fluid communication with the connecting pipe, and gas spraying holes are provided on the ring-shaped pipe and evenly spaced in a circumferential direction of the ring-shaped pipe.

7. The atomization device for preparing the metal alloy powder according to any one of claims 1 to 6, wherein the high-pressure inert gas pipeline system comprises a high-pressure inert gas pipeline and a gas nozzle, and the gas nozzle is in fluid communication with the high-pressure inert gas pipeline and is configured to spray high-pressure inert gas toward an inlet.

8. The atomization device for preparing the metal alloy powder according to claim 7, wherein a spray disk is disposed between the high-pressure inert gas pipeline and the gas nozzle; a cavity in fluid communication with the gas nozzle is disposed in the spray disk; and the gas nozzles are evenly spaced in a circumferential direction of the spray disk, optionally the gas nozzles are ring-shaped slits.

9. The atomization device for preparing the metal alloy powder according to claim 8, wherein the inlet passes through the middle of the spray disk, and a gas nozzle on the spray disk is disposed toward the inlet.

10. The atomization device for preparing the metal alloy powder according to any one of claims 1 to 9, wherein both of the oxygen-containing gas pipeline system and the high-pressure inert gas pipeline system are provided with a gas flow control device and a pressure regulating device.

11. The atomization device for preparing the metal alloy powder according to any one of claims 1 to 10, wherein a powder collection tank is detachably connected to the bottom portion of the atomization chamber.

12. The atomization device for preparing the metal alloy powder according to any one of claims 1 to 11, wherein the atomization chamber is provided with a gas outlet; the gas outlet is in fluid communication with an exhaust gas treatment device; and the exhaust gas treatment device comprises a cyclone separator and a powder filter device that are connected in sequence.

13. The atomization device for preparing the metal alloy powder according to any one of claims 1 to 12, wherein the main body further comprises a vacuum melting chamber which is provided with a melting device and a heating device, the heating device is configured to heat the melting device, and the melting device has a liquid outlet which is in fluid communication with the inlet of the atomization chamber via a flow guide pipe.

14. The atomization device for preparing the metal alloy powder according to claim 13, wherein a heating and insulating sleeve is provided at a periphery of the flow guide pipe.

15. An atomization device for preparing metal alloy powder, comprising a main body, in which a vacuum melting chamber and an automation chamber are arranged from up to down, the vacuum melting chamber is provided with a melting device and a heating device; the heating device heats the melting device; the melting device has a liquid outlet that is communicated with the top portion of the atomization chamber via the flow guide pipe; gas nozzles are provided in the atomization chamber, connected with the high-pressure insert gas pipeline, and spay the high-pressure insert gas toward the outlet of the flow guide pipe; an oxygen-containing pipeline and a gas intake device connected to the oxygen-containing pipeline are provided in the atomization chamber; and the oxygen-containing pipeline transfers an oxygen-containing gas into the atomization chamber via the gas intake device.

16. The atomization device for preparing the metal alloy powder according to claim 15, wherein a buffer disk is disposed between the oxygen-containing gas pipeline and the gas intake device, a buffer cavity is disposed in the buffer disk, and the oxygen-containing gas pipeline is in fluid communication with the gas intake device through the buffer cavity.

17. The atomization device for preparing the metal alloy powder according to claim 15 or 16, wherein the oxygen-containing gas pipeline is a low-pressure oxygen-containing gas pipeline, and a pressure in the low-pressure oxygen-containing gas pipeline is not less than 0.2 MPa, optionally, the pressure in the low pressure oxygen-containing gas pipeline is in a range of 0.2MPa to 0.9MPa.

18. The atomization device for preparing the metal alloy powder according to any one of claims 15 to 17, wherein the gas intake device comprises a plurality of metal pipes, and the metal pipes are vertically fixed on the upper portion of the atomization chamber, and are evenly spaced in a circumferential direction of the atomization chamber.

19. The atomization device for preparing the metal alloy powder according to any one of claims 15 to 18, wherein the gas intake device comprises a connecting pipe in fluid communication with the oxygen-containing gas pipeline and a ring-shaped pipe in fluid communication with the connecting pipe, and gas spraying holes are provided on the ring-shaped pipe and evenly spaced in a circumferential direction of the ring-shaped pipe.

20. The atomization device for preparing the metal alloy powder according to any one of claims 15 to 19, wherein both of the oxygen-containing gas pipeline and the high-pressure inert gas pipeline are provided with a gas flow control device and a pressure regulating device.

21. The atomization device for preparing the metal alloy powder according to any one of claims 15-20, wherein a spray disk is disposed between the high-pressure inert gas pipeline and the gas nozzle; a cavity in fluid communication with the gas nozzle is disposed in the spray disk; and the gas nozzles are evenly spaced in a circumferential direction of the spray disk.

22. The atomization device for preparing the metal alloy powder according to any one of claims 15-21, wherein the gas nozzles are ring-shaped slits.

23. The atomization device for preparing the metal alloy powder according to claim 21, wherein an outlet of the flow guide pipe passes through the middle of the spray disk, and a gas nozzle on the spray disk is disposed toward the outlet of the flow guide pipe.

24. The atomization device for preparing the metal alloy powder according to any one of claims 15 to 23, wherein a powder collection tank is detachably connected to the bottom portion of the atomization chamber.

25. The atomization device for preparing the metal alloy powder according to any one of claims 15 to 24, wherein the atomization chamber is provided with a gas outlet; the gas outlet is in fluid communication with an exhaust gas treatment device; and the exhaust gas treatment device comprises a cyclone separator and a powder filter device that are connected in sequence.

26. The atomization device for preparing the metal alloy powder according to any one of claims 15-25, wherein a heating and insulating sleeve is provided at a periphery of the flow guide pipe.

27. A method for preparing metal alloy powder, comprising:
introducing the metal alloy liquid into an atomization chamber;
spraying a high-pressure insert gas to the metal alloy liquid, to atomize the metal alloy liquid; and
introducing an oxygen-containing gas into an atomization zone of the atomization chamber, such that the atomization zone become an oxidizing atmosphere, so as to passivate a surface of the metal alloy powder obtained after atomization.
